(19) Europäisches Patentamt
European Patent Office
Office européen des brevets

(11) EP 3 466 625 A1

(12) EUROPÄISCHE PATENTANMELDUNG

(43) Veröffentlichungstag:
10.04.2019  Patentblatt 2019/15

(51) Int Cl.:
B28B 1/00 (2006.01)     B28B 11/00 (2006.01)
B28B 23/00 (2006.01)

(21) Anmeldenummer: 18199001.1

(22) Anmeldetag: 05.10.2018

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
KH MA MD TN

(30) Priorität: 05.10.2017  DE 102017123155

(71) Anmelder: Feiner Betonwerk GmbH & Co. KG
93437 Fürth im Wald (DE)

(72) Erfinder: FISCHER, Hans-Peter
93437 Furth im Wald (DE)

(74) Vertreter: SSM Sandmair
Patentanwälte Rechtsanwalt
Partnerschaft mbB
Joseph-Wild-Straße 20
81829 München (DE)

(54) VERBUNDPLATTE UND DEREN HERSTELLUNG

(57) Verfahren zum Herstellen einer Verbundplatte (1), die eine Fliese (30) und eine damit verbundene Betonplatte (50) aufweist, wobei das Verfahren die folgenden Schritte umfasst:
- Einbringen von Beton für die Betonplatte (50) in eine Form, wobei der Beton in der Form durch Pressen zu einem Betonplattenrohling verdichtet wird,
- Aufbringen eines Klebstoffs auf wenigstens einem aus Betonplattenrohling und Fliese (30) und Fügen des Betonplattenrohlings und der Fliese (30),
- nach dem Fügen Aushärten des Klebstoffs und des Betonplattenrohlings, wobei der ausgehärtete Betonplattenrohling die Betonplatte (50) ist.

Fig. 1

EP 3 466 625 A1

**Beschreibung**

Die Erfindung betrifft eine Verbundplatte und ein Verfahren für deren Herstellung. Die Verbundplatte umfasst eine Fliese, wie z. B. eine Keramikplatte, und eine damit verbundene bzw. verklebte Betonplatte. Die Verbundplatte ist hauptsächlich für die Verwendung als Bodenplatte im Außenbereich, beispielsweise im Garten oder auf der Terrasse gedacht, aber nicht darauf beschränkt.

Ähnliche Verbundplatten sind beispielsweise aus der EP 3 216 776 A1 und der EP 3 216 774 A1 bekannt. Darin wird eine Verbundplatte beschrieben, die aus einer auf eine Betonplatte aufgeklebten Fliese besteht. Die Betonplatte hat eine offene Struktur, damit Wasser durch diese Struktur fließen kann. Die genannten Druckschriften schlagen zur Verbesserung der Festigkeit der Klebeverbindung vor, dass die Platten mittels eines elastischen Klebstoffes verbunden werden, um eine möglichst spannungsfreie Klebeverbindung zu erhalten. Als Klebstoff wird ein insbesondere geschäumter Polymerklebstoff vorgeschlagen, wie z. B. Polyurethan.

Für die Herstellung der Verbundplatte schlagen die oben genannten Druckschriften vor, entweder eine ausgehärtete Betonplatte auf die Fliese zu kleben oder die Fliese in eine Form einzulegen und fließfähigen Beton auf die mit Klebstoff versehene Oberfläche der Fliese zu gießen. Der auf die Fliese aufgebrachte, fließfähige Beton kann optional mit einem Druck von wenigstens 2 bar und maximal 8 bar beispielsweise in Kombination mit einer Rüttelbewegung verdichtet werden, wobei zu beachten ist, dass die offene Struktur des Betons beibehalten wird.

Wenn die Fliese auf eine ausgehärtete Betonplatte geklebt wird, sind dazu zunächst die Verfahrensschritte zur Herstellung und zur Aushärtung der Betonplatte und anschließend die Verfahrensschritte zum Fügen der Betonplatte mit der Fliese auszuführen. Dadurch ergeben sich verhältnismäßig viele Verfahrensschritte bzw. eine lange Prozessdauer für die Herstellung der Verbundplatte. Wenn die Fliese in eine Form eingelegt wird und der fließfähige Beton auf die Fliese aufgebracht wird, erfordert dies, dass der Beton in der Form zumindest teilweise aushärtet. Dafür sind verhältnismäßig viele Formen erforderlich, was sich in erhöhten Produktionskosten bzw. Investitionskosten niederschlägt.

Die offenporige Struktur der Betonplatte hat zwar den Vorteil, dass das Wasser ablaufen kann, jedoch auch den Nachteil, dass Wasser in die Betonplatte eindringen kann. Insbesondere im Winter, wenn kurze Tauperioden auftreten, an die sich Frostperioden anschließen, besteht die Gefahr, dass sich Wasser in der Betonplatte sammelt, wobei durch das nicht abgeflossene gefrierende Wasser Frostschäden entstehen können.

Der Erfindung liegt die Aufgabe zugrunde, eine Verbundplatte zur Verlegung als Bodenbelag anzugeben, die geeignet ist im Freien verwendet zu werden, die robust, insbesondere auch gegen Temperaturschwankungen, und einfach herstellbar ist. Ferner ist es eine Aufgabe der Erfindung, ein Verfahren zur Herstellung einer Verbundplatte anzugeben, mit der die Verbundplatte einfach, kostengünstig und mit einer hohen Qualität herstellbar ist.

Die Aufgaben werden mit den Gegenständen der unabhängigen Ansprüche gelöst. Vorteilhafte Weiterbildungen ergeben sich aus den abhängigen Ansprüchen, der Beschreibung und den Figuren.

Die Verbundplatte weist eine solide, plattenförmige Fliese, die eine sichtbare Seite oder Fläche bzw. die obere Fläche der Verbundplatte bildet, und eine Betonplatte, die eine im verlegten Zustand nicht sichtbare Seite oder Fläche bzw. die untere Fläche der Verbundplatte bildet, auf. Die untere Fläche wird beim Verlegen der Verbundplatte auf einem granulatförmigen Untergrund oder Bett, wie z. B. einem Splitt-, Kies- oder Sandbett, positioniert und darauf aufgelegt. Die obere Fläche der Verbundplatte oder der Fliese ist dann begehbar bzw. sichtbar. Die die Oberseite der Fliese bildende Fläche (obere Fläche der Fliese) wird von Umfangsflächen, bei einer rechteckigen Fliese von vier Umfangsflächen der Fliese eingefasst oder begrenzt. Die die Unterseite der Betonplatte bildende Fläche (untere Fläche der Betonplatte) wird von Umfangsflächen, bei einer rechteckigen Betonplatte von vier Umfangsflächen eingefasst oder begrenzt.

Die Erfindung betrifft auch einen Bodenbelag, der einen Unterbau mit mindestens einem Bett aus Splitt, Sand oder Granulat, und mehrere auf dem Bett im Verband verlegte Verbundplatten aufweist, wobei zwischen den Verbundplatten Fugen gebildet sind und die Verbundplatten wie hierin beschrieben ausgebildet sind. Insbesondere sind die Verbundplatten für die Verlegung in ungebundener Bauweise vorgesehen, d. h., die Verbundplatten liegen insbesondere mit ihren unteren Flächen lose auf dem Bett auf und sind nicht mit einem Untergrund bzw. dem Bett verklebt.

Die Fliese kann eine geringere Dicke als die Betonplatte aufweisen. Die Fliese kann z. B. eine Keramikfliese, Zementfliese, Stein- oder Naturfliese oder Steingutfliese sein.

Das Verfahren zur Herstellung einer Verbundplatte, die eine Fliese und eine damit verbundene, insbesondere verklebte Betonplatte aufweist, umfasst das Einbringen von Beton für die Betonplatte in eine Form, insbesondere Pressform, wobei der Beton in der Form durch Pressen zu einem Betonplattenrohling verdichtet wird. Danach wird, insbesondere zur Bildung einer Klebstoffschicht, der Klebstoff entweder auf den Betonplattenrohling oder auf die Fliese oder sowohl auf den Betonplattenrohling und die Fliese aufgebracht, insbesondere auf die untere Fläche der Fliese und/oder die obere Fläche des Betonplattenrohlings. Optional kann auf die untere Fläche der Fliese und/oder die obere Fläche des Betonplattenrohlings vor dem Aufbringen des Klebstoffs oder vor dem Zusammenfügen ein Haftvermittler, Primer oder eine Grundierung aufgebracht werden.

Der Betonplattenrohling und die Fliese werden nach dem Aufbringen des Klebstoffs, insbesondere der Klebstoffschicht, zusammengefügt, insbesondere mittels des dazwischen befindlichen Klebstoffs, der davor auf wenigstens eines aus Betonplattenrohling und Fliese, insbesondere auf die untere Fläche der Fliese und/oder der oberen Fläche der Betonplatte aufgebracht wurde. Nach dem Fügen werden der Klebstoff (bzw. die Klebstoffschicht) und der Betonplattenrohling ausgehärtet. Der ausgehärtete Betonplattenrohling ist dann die Betonplatte. D. h., dass die Betonplatte und der Betonplattenrohling sich im Wesentlichen nur dadurch unterscheiden, dass der Betonplattenrohling noch nicht ausgehärtet ist, während die Betonplatte ausgehärtet ist.

Durch das gemeinsame Aushärten von Klebstoff und Betonplattenrohling nehmen mechanische Spannungen zwischen dem Klebstoff und dem Betonplattenrohling im Vergleich zu einem Verkleben der Fliese mit einer ausgehärteten Betonplatte ab. Hierdurch wird die Beständigkeit gegen Temperaturunterschiede verbessert, wodurch sich die Verbundplatte besonders für die Verlegung im Freien eignet. Außerdem wird durch das Fügen der Fliese mit dem Betonplattenrohling bzw. mit der Betonplatte bevor diese ausgehärtet ist, die Prozessdauer zur Herstellung der Verbundplatte verkürzt. Wird die Fliese auf eine ausgehärtete Betonplatte geklebt, muss zunächst die Betonplatte ausgehärtet werden, wobei anschließend die Fliese mit der Betonplatte verklebt wird. Die Klebeverbindung benötigt ihrerseits wieder Zeit zum Aushärten. Daher kann durch das gemeinsame Aushärten von Klebstoff und Betonplattenrohling die Prozesszeit bzw. Zeit zur Herstellung der Verbundplatte erheblich verkürzt werden. Dadurch, dass die Fliese nicht wie bei anderen Verfahren in die Form eingelegt werden braucht, um den fließfähigen Beton mit der Fliese zu verkleben, wird die sichtbare Oberfläche der Fliese geschont.

Beispielsweise kann der Beton in der Form durch Pressen mit einem Druck von mindestens $2{,}4\ \frac{\text{N}}{\text{mm}^2}$ oder mindestens $12\ \frac{\text{N}}{\text{mm}^2}$ zu einem Betonplattenrohling verdichtet werden. Durch diese Drücke wird in dem Betonplattenrohling bzw. der späteren Betonplatte eine geschlossenporige Struktur des Betons erzeugt. Die geschlossenporige Struktur bewirkt, dass während sich abwechselnder Frost- und Tauperioden im Winter kein oder kaum Wasser in die Betonplatte aufgenommen wird, wodurch die Gefahr von Frostschäden erheblich verringert wird. Außerdem wird durch diese Mindestpressdrücke erreicht, dass der Beton auch in unausgehärtetem Zustand, d. h. als Betonplattenrohling, so fest zusammenhält, dass er bzw. der Betonplattenrohling unter Beibehaltung seiner durch die (Press-)Form erhaltenen, insbesondere geometrischen, Form aus der (Press-)Form entformt oder entnommen werden kann. Mit anderen Worten, behält der Betonplattenrohling seine durch die (Press-)Form vorgegebene geometrische Form beim Entformen und auch danach bei, wodurch der Betonplattenrohling als Festkörper handhabbar ist. Dadurch kann der Betonplattenrohling z. B. durch einen Greifer aufgenommen werden und weiteren Arbeitsschritten zugeführt werden, ohne dass er in der Form verbleiben muss. Dadurch wird erreicht, dass verhältnismäßig wenige Formen im Vergleich zu Verfahren, bei denen der Beton in der Form aushärtet, benötigt werden, wodurch die Investitionskosten für die Beschaffung der Formen verringert werden können.

Der Beton kann durch Pressen mit einem Druck von höchstens $50\ \frac{\text{N}}{\text{mm}^2}$ oder höchstens $32\ \frac{\text{N}}{\text{mm}^2}$ zu einem Betonplattenrohling verdichtet werden. Über diese Maximaldrücke hinausgehende Drücke sind grundsätzlich möglich, aber erzielen bezüglich der Geschlossenporigkeit und des Zusammenhalts des Betonplattenrohlings keine weiteren nennenswerten positiven Effekte mehr.

Das Verdichten des Plattenrohlings durch Pressen kann beispielsweise mittels eines Druckstempels durchgeführt werden, der auf den in die - bezogen auf die Schwerkraftrichtung - oben offene Form eingebrachten Beton wirkt. Beispielsweise kann der Beton zu dem Betonplattenrohling in die Richtung gepresst werden, die der Richtung der Dicke der Betonplatte bzw. des Betonplattenrohlings entspricht.

Die Form, in die der Beton eingebracht wird, kann einen Boden und Seitenwände aufweisen, wobei die Seitenwände die geometrische Umfangsform bzw. die Umfangsflächen der Betonplatte bzw. des Betonplattenrohlings vorgeben. Beispielsweise kann der Betonplattenrohling bzw. die Betonplatte den Umfang betreffend rechteckig sein oder eine andere gewünschte Form aufweisen. Demnach kann die Betonplatte bzw. der Betonplattenrohling im Querschnitt senkrecht zur Richtung der Dicke der Betonplatte rechteckig sein oder eben eine andere bestimmte geometrische Form aufweisen. Die rechteckige Form schließt auch eine quadratische Form mit ein.

Die Innenmaße der Form in Bezug auf Länge und Breite können dem Außenmaß des Betonplattenrohlings und/oder der Betonplatte und/oder ggf. der Fliese entsprechen. Beispielsweise kann jede der Umfangsflächen der Fliese bündig mit jeweils einer Umfangsfläche des Betonplattenrohlings oder der Betonplatte sein. Dadurch wird erreicht, dass die Fliese kongruent oder deckungsgleich mit der Betonplatte ist. Mit anderen Worten kann die Betonplatte bzw. der Betonplattenrohling die gleichen Außenmaße bezüglich Länge und Breite wie die Fliese aufweisen.

Alternativ können die Innenmaße der (Press-)Form in Bezug auf Länge und Breite größer sein, insbesondere um bis zu 6 mm, insbesondere um bis zu 4 mm oder bis zu 2 mm größer sein, als das Außenmaß der Fliese in Bezug auf Länge und Breite. Beispielsweise kann jede der Umfangsflächen des Betonplattenrohlings bzw. der Betonplatte um bis zu 3 mm, insbesondere um bis zu 2 mm oder um bis zu 1 mm von der ihr zugeordneten Umfangsfläche der Fliese nach außen hin versetzt angeordnet sein. Der hierdurch erzielbare Effekt ist, dass die bodennächste Seitenkante der Fliese der fertigen Verbundplatte, wobei die Verbundplatte in der Regel stehend transportiert wird, geschont oder vor Beschädigungen geschützt wird, da sichergestellt wird, dass nicht die Seitenkante der Fliese, sondern eine Umfangsfläche der Betonplatte auf dem Boden der Transporteinheit aufliegt.

Optional können an den Umfangsflächen der Betonplatte bzw. des Betonplattenrohlings, die bündig mit oder nach außen versetzt zu den Umfangsflächen der Fliese sind, Abstandshalter angebracht sein oder werden, welche bewirken, dass die Verbundplatte eine definierte Fuge mit einer daneben angebrachten Verbundplatte bildet, wenn die Verbundplatten auf dem Verlegebett verlegt werden. Solche Abstandshalter werden beispielsweise in der EP 3 112 331 A1 beschrieben. Dementsprechend kann die Seitenwand der (Press-)Form Ausnehmungen für die Abstandshalter aufweisen.

Der Beton, der in die (Press-)Form eingebracht wird, kann einen Wasser-Zement-Wert von 0,1 bis 0,6 aufweisen. Der Beton, bzw. der Betonplattenrohling oder die Betonplatte, kann Zuschläge in Form von gebrochenen oder gewaschenen Körnungen aus frostsicheren Gesteinen, Glas, Hochofenschlacke, organische Körnungen (Kunststoffe), Schaumlava, Bläh- oder Schaumglas (PORAVER), Blähton, geschäumte Kunststoffe oder Kunststoffkörper, insbesondere duroplastische oder thermoplastische Kunststoffe, wie z.B. Polystyrol, Polyurethan, usw. aufweisen. Die Korngrößen dieser zugeschlagenen Körper können in gewissen Grenzen beliebig variieren. Beispielsweise können die Korngrößen 0/1 bis 1/4 (mm) bis 0/2 bis 4/8 (mm) betragen. Die Betondichte kann beispielsweise von 1,3 t/m$^3$ bis 2,9 t/m$^3$ betragen. Als Zement kann beispielsweise Grauzement/ Weißzement nach DIN EN 197-1 oder CEM I 42,5; CEM II BS 42,5 in Frage kommen. Grundsätzlich sind auch andere Zemente möglich.

Der Beton, der in die Pressform eingebracht wird, kann als Standardbeton oder als Leichtbeton ausgeführt sein. Insbesondere bei großformatigen Fliesen oder Verbundplatten können durch Leichtbeton die Vorgaben zum Gesundheitsschutz beim Heben und Tragen erfüllt werden, wodurch solche Verbundplatten einfach verlegt werden können.

Standardbeton kann einen Wasser-Zement-Wert von 0,1 bis 0,4, typischerweise von 0,2 aufweisen. Der Beton, bzw. der Betonplattenrohling oder die Betonplatte, kann Zuschläge in Form von gebrochenen oder gewaschenen Körnungen aus frostsicheren Gesteinen, Glas, Hochofenschlacke, organische Körnungen (Kunststoffe) aufweisen. Die Korngrößen dieser zugeschlagenen Körper können in gewissen Grenzen beliebig variieren. Beispielsweise können die Korngrößen 0/1 bis 1/4 (mm) bis 0/2 bis 4/8 (mm), typischerweise 0/2 bis 2/5 (mm), betragen. Die Betondichte kann beispielsweise von 2,1 t/m$^3$ bis 2,9 t/m$^3$, typischerweise 2,4 bis 2,6 t/m$^3$, betragen. Als Zement kann beispielsweise Grauzement/ Weißzement nach DIN EN 197-1 oder CEM I 42,5; CEM II BS 42,5 in Frage kommen. Grundsätzlich sind auch andere Zemente möglich.

Leichtbeton kann einen Wasser-Zement-Wert von 0,2 bis 0,6 aufweisen. Der Beton, bzw. der Betonplattenrohling oder die Betonplatte, kann Zuschläge in Form von gebrochenen oder gewaschenen Körnungen aus frostsicheren Gesteinen, Glas, Hochofenschlacke, organische Körnungen (Kunststoffe), Schaumlava, Bläh- oder Schaumglas (PORAVER), Blähton, geschäumte Kunststoffe oder Kunststoffkörper, insbesondere duroplastische oder thermoplastische Kunststoffe, wie z.B. Polystyrol, Polyurethan, usw. aufweisen. Die Korngrößen dieser zugeschlagenen Körper können in gewissen Grenzen beliebig variieren. Beispielsweise können die Korngrößen 0/1 bis 1/4 (mm) bis 0/2 bis 4/8 (mm), typischerweise 0/2 bis 1/4 (mm), betragen. Die Betondichte kann beispielsweise von 1,3 t/m$^3$ bis 2,3 t/m$^3$, typischerweise 1,8 bis 2,1 t/m$^3$, betragen. Als Zement kann beispielsweise Grauzement/ Weißzement nach DIN EN 197-1 oder CEM I 42,5; CEM II BS 42,5 in Frage kommen. Grundsätzlich sind auch andere Zemente möglich.

Allgemein kann der Beton, insbesondere Standard- oder Leichtbeton, mit oder ohne Zusatzmittel hergestellt sein. Optional können Zusatzmittel in Form von Hydrophobierung, Titanoxidverbindungen, Fließmittel, Verdichter, Verzögerer, Beschleuniger und alle Zusatzstoffe, die zur Optimierung der Betoneigenschaften und Verarbeitung dienen, in den Beton eingemischt sein.

Der Beton bzw. die Betonplatte oder der Betonplattenrohling kann ohne Bewehrungen oder mit Bewehrungen, wie z. B. Baustahlgewebe, Stahlfasern, Glas-, Kohle- und Aramidfasern und daraus gebildeten Geweben verstärkt sein.

Der Betonplattenrohling kann aus der Form entnommen werden, wobei der Betonplattenrohling und die Fliese außerhalb der Form gefügt oder verklebt werden. Alternativ dazu kann die Fliese mit dem Betonplattenrohling gefügt, insbesondere verklebt werden, wenn sich der Betonplattenrohling noch in der Form befindet. Betonplattenrohling und Fliese können dann z. B. zum Aushärten als Verbundkörper aus der Form entnommen werden.

Zum Fügen oder Verkleben wird mindestens eines aus Betonplattenrohling und Fliese zueinander kongruent, d. h. deckungsgleich, oder so positioniert, dass die Fliese in etwa zentrisch zu der oberen Fläche des Betonplattenrohlings ist. Das Positionieren kann z. B. mittels eines Roboters, der eine Greifvorrichtung für den Betonplattenrohling oder die Fliese aufweist, erfolgen. Beispielsweise kann die Fliese relativ zum Betonplattenrohling positioniert werden oder umgekehrt. Optional können sowohl der Betonplattenrohling und die Fliese relativ zueinander positioniert werden. Betonplattenrohling, insbesondere die obere Fläche der Betonplatte, und Fliese, insbesondere die untere Fläche der Fliese, werden, wenn sie zueinander kongruent oder zentrisch positioniert sind, aneinandergedrückt, wodurch der an wenigstens einem aus Betonplattenrohling und Fliese befindliche Klebstoff (bzw. Klebstoffschicht) den Betonplattenrohling und die Fliese miteinander verbindet. Der Betonplattenrohling und die Fliese werden vorzugsweise mit einer Kraft aneinandergedrückt, die $0{,}6 \cdot 10^{-3}\, \frac{N}{mm^2}$ bis $10 \cdot 10^{-3}\, \frac{N}{mm^2}$, insbesondere $1{,}5 \cdot 10^{-3}\, \frac{N}{mm^2}$ bis $5{,}5 \cdot 10^{-3}\, \frac{N}{mm^2}$ entspricht. Durch diese Anpressdrücke wird eine hervorragende Klebeverbindung geschaffen und andererseits sichergestellt, dass der Betonplattenrohling durch die Pressdrücke nicht auseinanderbricht.

Beispielsweise können der Betonplattenrohling und die Fliese mittels des Klebstoffs vollflächig verklebt werden. Beispielsweise kann der Klebstoff auf wenigstens einen aus Betonplattenrohling und Fliese vollflächig aufgetragen werden, insbesondere mit oder ohne einem Profil, wie z. B. einem Zahnprofil.

Durch eine vollflächige Verklebung wird die Gefahr des Eindringens von Wasser zwischen die Fliese und die Betonplatte verringert. Außerdem wird durch die vollflächige Verklebung die Gefahr von Beschädigungen der Fliese bei Flächenbelastung, wenn die Verbundplatte verlegt ist, verringert.

Als Klebstoff eignet sich Fliesenkleber auf Zementbasis wie z. B. Zementkleber oder Flexkleber. Insbesondere kann der Klebstoff ein mineralischer Klebstoff, wie zum Beispiel ein polymervergüteter mineralischer Klebstoff oder Klebemörtel sein.

Insbesondere kann der Klebstoff mineralisches Bindemittel oder als Bindemittel zumindest zum größten Teil mineralisches Bindemittel umfassen. Durch den Klebstoff auf Zementbasis oder einen Klebstoff, der als Bindemittel mineralisches Bindemittel oder als Bindemittel zum größten Teil mineralisches Bindemittel umfasst, kann eine dauerhafte und qualitativ hochwertige Verbindung zwischen der Fliese und der Betonplatte hergestellt werden, die auch den Witterungsbedingungen im Freien standhält.

Ein polymervergüteter mineralischer Klebstoff oder Klebemörtel kann beispielsweise folgende Zusammensetzungen aufweisen:

| | |
|---|---|
| Portlandzement | 25 bis 55 % |
| Kalk | 0 bis 3% |
| Zusatzstoffe | 0 bis 10 % |
| Sand, dicht 0 bis 0,5 mm | 20 bis 60 % |
| Dispersionspulver, Methylcellulose, Stabilisator, Erhärtungsbeschleuniger, Luftporenbildner und Fasern | 0 bis 20 % |

Das Aushärten des Klebstoffs und des Betonplattenrohlings kann auf verschiedene Weisen erfolgen. Beispielsweise kann das Aushärten bzw. das Abbinden durch Lagern bei Umgebungstemperatur in einer Halle oder im Freien erfolgen. Alternativ kann das Aushärten bzw. Abbinden in Trockenkammern bzw. Anlagen ohne externe Energiezufuhr erfolgen, insbesondere als ungesteuerter oder gesteuerter Prozess. Beispielsweise kann eine $CO_2$-Zufuhr stattfinden. Beispielsweise kann die Luftfeuchtigkeit von 70 bis 100 % und eine Temperatur von 15 bis 40 °C ohne Zuführung von externer Energie eingestellt werden. In einer weiteren Alternative kann das Aushärten bzw. Abbinden lassen in einer Trockenkammer oder einer Anlage mit der Zufuhr von externer Energie als gesteuerter Prozess stattfinden, insbesondere mit oder ohne der Zufuhr von $CO_2$.

Durch das Verfahren ergibt sich eine Verbundplatte zur Verlegung als Bodenbelag bzw. Pflaster, insbesondere im Freien, wobei die Verbundplatte eine Fliese und eine damit verklebte Betonplatte aufweist. In vorteilhaften Weiterbildungen können die Umfangsflächen der Fliese bündig mit den Umfangsflächen der Betonplatte sein, wodurch die Fliese und die Betonplatte kongruent oder deckungsgleich sind. In alternativen vorteilhaften Weiterbildungen kann jede der Umfangsflächen des Betonplattenrohlings bzw. der Betonplatte um bis zu 3 mm, insbesondere um bis zu 2 mm oder um bis zu 1 mm von der ihr zugeordneten Umfangsfläche nach außen hin versetzt angeordnet sein. Dadurch ergeben sich - wie weiter oben erwähnt - Vorteile beim beispielsweise stehenden Transport, aber auch bei der Handhabung der Verbundplatte dergestalt, dass die Kanten der Fliese geschont werden und die Gefahr von Beschädigungen verringert wird.

Insbesondere ist die Fliese mit der Betonplatte durch Verkleben gefügt, insbesondere durch vollflächiges Verkleben gefügt worden, als die Betonplatte bereits gepresst, insbesondere bereits zu einem Betonplattenrohling gepresst, und unausgehärtet war. Dadurch ergeben sich die oben genannten Vorteile insbesondere im Hinblick auf eine bessere Beständigkeit gegen Temperaturschwankungen aufgrund verringerter mechanischer Spannungen zwischen Klebstoff und Betonplatte beim Herstellungsprozess und eine kostengünstige Herstellungsmöglichkeit der Verbundplatte.

An dem ausgehärteten Betonplattenrohling bzw. der Betonplatte kann durch Untersuchungen festgestellt werden, dass die Fliese mit der Betonplatte durch Verkleben gefügt wurde, als die Betonplatte gepresst und unausgehärtet war.

Wie bereits erwähnt, kann die Betonplatte der Verbundplatte geschlossenporig sein, wodurch die Gefahr des Eindringens von Wasser in die Betonplatte verringert wird.

Durch die Verklebung der Betonplatte und der Fliese mittels eines Klebstoffs auf Zementbasis oder eines mineralischen Klebstoffs, wie zum Beispiel eines polymervergüteten mineralischen Klebstoffs oder Klebemörtels oder eines Klebstoffs der mineralisches Bindemittel oder als Bindemittel zum größten Teil mineralisches Bindemittel umfasst, kann eine qualitativ hochwertige Verbindung zwischen der Betonplatte und der Fliese hergestellt werden, die auch den Anforderungen genügt, die bei der Verwendung im Freien gestellt werden.

Der hierin verwendete Begriff "Dicke" (oder auch Höhe) wird als Abstand zwischen einer oberen Fläche und einer unteren Fläche verstanden. "Länge" und "Breite" sind orthogonal zueinander und zu der Dicke zu verstehen.

Die Erfindung wurde anhand mehrerer Ausführungen und Beispiele beschrieben. Im Folgenden wird eine Verbundplatte anhand von Figuren beschrieben. Die dabei offenbarten Merkmale bilden den Gegenstand der Erfindung einzeln und in jeder Merkmalskombination vorteilhaft weiter. Es zeigen:

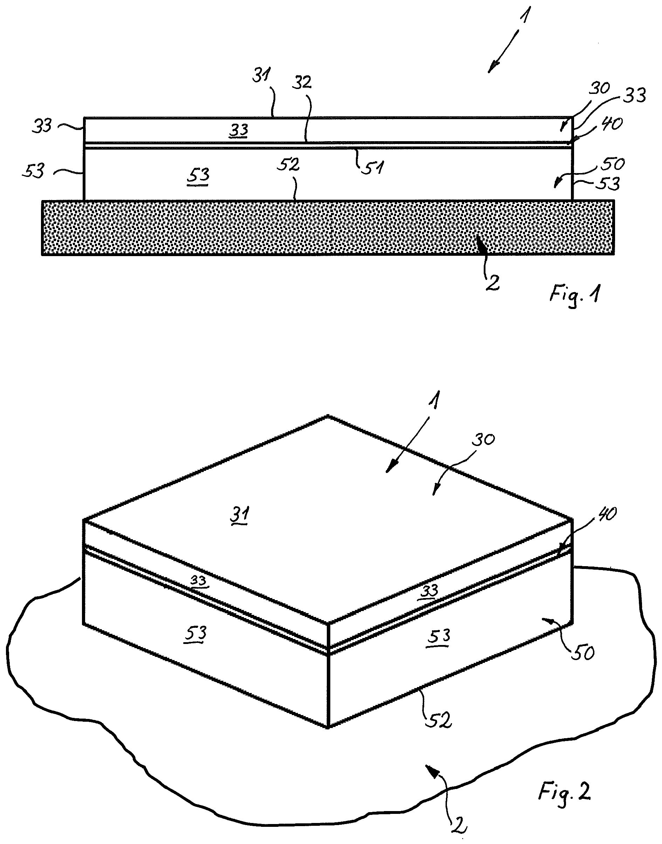

Figur 1     eine Verbundplatte in ungebundener Bauweise auf einem Verlegebett und

Figur 2     eine perspektivische Ansicht der Figur 1.

In den Figuren wird exemplarisch eine auf einem Bett 2 verlegte Verbundplatte 1 dargestellt. Die Verbundplatte 1 weist eine Fliese 30 auf, welche mittels einer Klebstoffschicht 40 auf eine Betonplatte 50 geklebt ist. Die obere Fläche 31 der Fliese 30 bildet die sichtbare Oberfläche der verlegten Verbundplatte 1. Die untere Fläche 52 der Betonplatte 50 ist die auf dem Bett 2 aufliegende Fläche der Verbundplatte 1. Die untere Fläche 32 der Fliese 30 und die obere Fläche 51 der Betonplatte 50 sind mittels der Klebstoffschicht 40 verbunden und mit dem Klebstoff benetzt. Die die untere Fläche 52 und/oder die obere Fläche 51 einfassenden bzw. begrenzenden Umfangsflächen 53 der Betonplatte 50 sind in dem gezeigten Beispiel bündig zu den die obere Fläche 31 und/oder die untere Fläche 32 einfassenden Umfangsflächen 33 der Fliese 30. Die Fliese 30 ist somit kongruent oder deckungsgleich zu der Betonplatte 50 angeordnet.

In einer nicht anhand von Figuren dargestellten Alternative können die Außenmaße der Betonplatte 50 in Bezug auf Länge und Breite, jeweils gemessen zwischen gegenüberliegenden Umfangsflächen 53, welche die obere Fläche 51 und/oder die untere Fläche 52 einfassen bzw. begrenzen, größer sein, insbesondere um bis zu 6 mm, insbesondere um bis zu 4 mm oder bis zu 2 mm größer sein, als das Außenmaß der Fliese 30 in Bezug auf Länge und Breite, jeweils gemessen zwischen gegenüberliegenden Umfangsflächen 53, welche die obere Fläche 31 und/oder die untere Fläche 32 einfassen bzw. begrenzen. Beispielsweise kann jede der die obere Fläche 51 und/oder die untere Fläche 52 einfassenden bzw. begrenzenden Umfangsflächen 53 der Betonplatte 50 um bis zu 3 mm, insbesondere um bis zu 2 mm oder um bis zu 1 mm von der ihr zugeordneten, die obere Fläche 31 und/oder die untere Fläche 32 einfassenden bzw. begrenzenden Umfangsfläche 33 der Fliese 30 nach außen hin versetzt angeordnet sein.

Optional können von mindestens einer oder von jeder der Umfangsflächen 53 der Betonplatte 50 ein oder mehrere Abstandshalter (nicht dargestellt) ragen, welche dazu vorgesehen sind, einen definierten Abstand mit einer definierten Fuge zu einer benachbarten Verbundplatte zu ermöglichen.

Die Verbundplatte 1 liegt mit ihrer unteren Fläche 52 lose auf dem Verlegebett 2 auf. Das Bett 2 kann aus Splitt, Sand oder einem anderen granulatförmigen Material bestehen, wie es im Pflasterbau üblich ist.

Erfindungsgemäß wurden die Fliese 30 und die Betonplatte 50 mittels der Klebeschicht 40, die an wenigstens einer aus unteren Fläche 32 der Fliese 30 und oberen Fläche 51 der Betonplatte 50 angeordnet wurde, durch Aneinanderdrücken von Fliese 30 und Betonplatte 50 verklebt und zwar in einem durch Pressen verdichteten aber unausgehärteten Zustand der Betonplatte 50 (Betonplattenrohling). Dadurch wird eine hochwertige und kostengünstig herstellbare Verbundplatte erreicht.

## Patentansprüche

1.  Verfahren zum Herstellen einer Verbundplatte (1), die eine Fliese (30) und eine damit verbundene Betonplatte (50) aufweist, wobei das Verfahren die folgenden Schritte umfasst:

    - Einbringen von Beton für die Betonplatte (50) in eine Form, wobei der Beton in der Form durch Pressen zu einem Betonplattenrohling verdichtet wird,
    - Aufbringen eines Klebstoffs auf wenigstens einem aus Betonplattenrohling und Fliese (30) und Fügen des Betonplattenrohlings und der Fliese (30),
    - nach dem Fügen Aushärten des Klebstoffs und des Betonplattenrohlings, wobei der ausgehärtete Betonplattenrohling die Betonplatte (50) ist.

2.  Verfahren nach Anspruch 1, **dadurch gekennzeichnet, dass** der Beton in der Form durch Pressen mit einem Druck von mindestens $2,4\,\frac{N}{mm^2}$ oder mindestens $12\,\frac{N}{mm^2}$ zu einem Betonplattenrohling verdichtet wird und/oder dass der Beton in der Form durch Pressen mit einem Druck von höchstens $50\,\frac{N}{mm^2}$ oder höchstens $32\,\frac{N}{mm^2}$ zu einem Betonplattenrohling verdichtet wird.

3. Verfahren nach einem der vorhergehenden Ansprüche, **dadurch gekennzeichnet, dass** die Innenmaße der Form in Bezug auf Länge und Breite dem Außenmaß des Betonplattenrohlings und/oder der Betonplatte (50) und/oder der Fliese (30) entsprechen, so dass jede der Umfangsflächen (53) der Fliese (30) bündig mit jeweils einer Umfangsfläche (53) des Betonplattenrohlings oder der Betonplatte (50) ist.

4. Verfahren nach einem der Ansprüche 1 oder 2, **dadurch gekennzeichnet, dass** die Innenmaße der Form in Bezug auf Länge und Breite größer sind, insbesondere um bis zu 6 mm, insbesondere um bis zu 4 mm oder bis zu 2 mm größer sind, als das Außenmaß der Fliese (30) in Bezug auf Länge und Breite, und/oder dass jede der Umfangsflächen (53) des Betonplattenrohlings um bis zu 3 mm, insbesondere um bis zu 2 mm oder um bis zu 1 mm von der ihr zugeordneten Umfangsfläche (31) der Fliese (30) nach außen hin versetzt angeordnet ist.

5. Verfahren nach einem der vorhergehenden Ansprüche, **dadurch gekennzeichnet, dass** der Betonplattenrohling durch das Pressen in der Form so stark verdichtet ist, dass er seine Form beibehält, wenn er aus der Form entnommen wird, und/oder geschlossenporig ist.

6. Verfahren nach einem der vorhergehenden Ansprüche, **dadurch gekennzeichnet, dass** der Klebstoff ein mineralischer Klebstoff, insbesondere ein polymervergüteter mineralischer Klebstoff oder Mörtel ist.

7. Verfahren nach einem der vorhergehenden Ansprüche, **dadurch gekennzeichnet, dass** mindestens eines aus Betonplattenrohling und Fliese (30) zueinander kongruent oder zentrisch positioniert und dann zum Fügen aneinandergedrückt werden, und/oder dass die Fliese (30) und der Betonplattenrohling zum Fügen mit einer Kraft aus dem Bereich von $0{,}6{\cdot}10^{-3}\,\frac{N}{mm^2}$ bis $10{\cdot}10^{-3}\,\frac{N}{mm^2}$ oder $1{,}5{\cdot}10^{-3}\,\frac{N}{mm^2}$ bis $5{,}5{\cdot}10^{-3}\,\frac{N}{mm^2}$ aneinandergedrückt werden.

8. Verfahren nach einem der vorhergehenden Ansprüche, **dadurch gekennzeichnet, dass** der Betonplattenrohling aus der Form entnommen wird und die Fliese (30) und der Betonplattenrohling außerhalb der Form gefügt werden oder dass die Fliese (30) und der Betonplattenrohling gefügt werden, wenn sich der Betonplattenrohling in der Form befindet.

9. Verfahren nach einem der vorhergehenden Ansprüche, **dadurch gekennzeichnet, dass** der Betonplattenrohling und die Fliese (30) mittels des Klebstoffs vollflächig verklebt werden.

10. Verfahren nach einem der vorhergehenden Ansprüche, **dadurch gekennzeichnet, dass** der den Betonplattenrohling und die Fliese (30) umfassende Verbundkörper in eine Trockenkammer transportiert wird, in welcher der Klebstoff und der Betonplattenrohling ausgehärtet werden.

11. Verbundplatte (1) zur Verlegung als Bodenbelag oder Pflaster in ungebundener Bauweise, insbesondere im Freien, wobei die Verbundplatte (1) eine Fliese (30) und eine damit verklebte Betonplatte (50) aufweist.

12. Verbundplatte (1) nach dem vorhergehenden Anspruch, **dadurch gekennzeichnet, dass** die Betonplatte (50) geschlossenporig ist und/oder die Fliese (30) mit der Betonplatte (50) vollflächig verklebt ist.

13. Verbundplatte (1) nach einem der zwei vorhergehenden Ansprüche, **dadurch gekennzeichnet, dass** die Betonplatte (50) und die Fliese (30) mittels eines mineralischen Klebstoffs, insbesondere eines polymervergüteten mineralischen Klebstoffs oder Mörtels verklebt sind.

14. Verbundplatte (1) nach einem der drei vorhergehenden Ansprüche, **dadurch gekennzeichnet, dass** die die obere Fläche (31) der Fliese (30) einfassenden Umfangsflächen (33) der Fliese (30) bündig mit den die untere Fläche (52) der Betonplatte (30) einfassenden Umfangsflächen (53) der Betonplatte (50) sind.

**15.** Verbundplatte (1) nach einem der Ansprüche 11 bis 13, **dadurch gekennzeichnet, dass** die Außenmaße der Betonplatte (50) in Bezug auf Länge und Breite größer sind, insbesondere um bis zu 6 mm, insbesondere um bis zu 4 mm oder bis zu 2 mm größer sind, als das Außenmaß der Fliese (30) in Bezug auf Länge und Breite, und/oder dass jede der Umfangsflächen (53) der Betonplatte (50) um bis zu 3 mm, insbesondere um bis zu 2 mm oder um bis zu 1 mm von der ihr zugeordneten Umfangsfläche (33) der Fliese (30) nach außen hin versetzt angeordnet ist.

Fig. 1

Fig. 2

**Europäisches Patentamt**
**European Patent Office**
**Office européen des brevets**

# EUROPÄISCHER RECHERCHENBERICHT

Nummer der Anmeldung

EP 18 19 9001

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2009/049793 A1 (NEWITT MICHAEL JAMES [AU] ET AL) 26. Februar 2009 (2009-02-26) | 1-3,5-14 | INV. B28B1/00 |
| Y | * Abbildungen 1-9 * <br> * Absätze [0074] - [0088] * <br> ----- | 4 | B28B11/00 B28B23/00 |
| X | CN 104 727 200 A (LYU GUOBING) 24. Juni 2015 (2015-06-24) <br> * Abbildung 1 * <br> * Ansprüche 1,2 * <br> ----- | 11-14 | |
| X | DE 298 10 311 U1 (GILNE GMBH [DE]) 19. November 1998 (1998-11-19) <br> * Abbildungen 1-3 * <br> * Seite 1, Absätze 7,8 * <br> ----- | 11-13,15 | |
| X | EP 2 939 567 A1 (SCHÜTTE ULRICH [DE]) 4. November 2015 (2015-11-04) | 11-13,15 | |
| Y | * Abbildung 1 * <br> * Absatz [0014] * <br> ----- | 4 | |

RECHERCHIERTE SACHGEBIETE (IPC)

B28B
E04F
B32B
E01C

Der vorliegende Recherchenbericht wurde für alle Patentansprüche erstellt

| Recherchenort | Abschlußdatum der Recherche | Prüfer |
|---|---|---|
| Den Haag | 5. März 2019 | Voltz, Eric |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 19 9001

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-03-2019

| Im Recherchenbericht angeführtes Patentdokument | Datum der Veröffentlichung | Mitglied(er) der Patentfamilie | Datum der Veröffentlichung |
|---|---|---|---|
| US 2009049793 A1 | 26-02-2009 | AU 2006326914 A1<br>NZ 569196 A<br>US 2009049793 A1<br>WO 2007070925 A1 | 28-06-2007<br>29-07-2011<br>26-02-2009<br>28-06-2007 |
| CN 104727200 A | 24-06-2015 | KEINE | |
| DE 29810311 U1 | 19-11-1998 | KEINE | |
| EP 2939567 A1 | 04-11-2015 | DE 102014106136 A1<br>EP 2939567 A1 | 05-11-2015<br>04-11-2015 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

**In der Beschreibung aufgeführte Patentdokumente**

- EP 3216776 A1
- EP 3216774 A1

- EP 3112331 A1